# DEMANDE DE BREVET EUROPEEN

(11) **EP 1 122 809 A1**
(43) Date de publication de la demande: **08.08.2001**
(21) Numéro de dépôt: 01400238.0
(22) Date de dépôt: 30.01.2001
(51) Int. Cl.: H01Q 1/32, E05B 49/00, B60R 25/00, B60N 3/02

(54) **Antennes, placées dans des poignées de retenue, pour système d'accès dit "mains libres"**

(30) Priorité: 31.01.2000 FR 0001190
(71) Demandeur: Valeo Securité Habitacle, 94042 Créteil (FR)
(72) Inventeur: Baudard, Xavier, 75016 Paris (FR)
(74) Mandataire: Croonenbroek, Thomas

(57) **Abrégé**

Le véhicule automobile est équipé d'un dispositif de reconnaissance (1) assurant la commande des moyens de verrouillage des portes du véhicule automobile (V). Ce dispositif de reconnaissance est apte à échanger à distance des données avec un organe d'identification (17) porté par un utilisateur pour permettre l'accès au véhicule lorsque l'organe d'identification a été authentifié par le dispositif de reconnaissance. Ce dernier étant relié à au moins une antenne (2,3,4,5) disposée à l'intérieur du véhicule dans une poignée de retenue de passager (6,8,10,12).

## Description

L'invention concerne un véhicule automobile équipé d'un système d'accès dit «mains libres».

Dans un tel système, un dispositif de reconnaissance, parfois appelé aussi dispositif d'identification, est installé sur le véhicule pour commander les moyens de verrouillage des portes et autres ouvrants du véhicule, ce dispositif de reconnaissance étant apte à échanger à distance des données avec un organe d'identification, parfois appelé aussi « identifiant », porté par un utilisateur, pour permettre l'accès au véhicule lorsque l'organe d'identification a été authentifié par le dispositif de reconnaissance. Pour permettre le dialogue entre le dispositif de reconnaissance et l'organe d'identification, plusieurs antennes sont généralement réparties sur le pourtour du véhicule afin de détecter la présence de l'organe d'identification à l'extérieur du véhicule.

Lorsque l'utilisateur a commandé le verrouillage des portes du véhicule, par exemple en appuyant sur un bouton prévu à cet effet sur la poignée de porte extérieure, et qu'il s'éloigne du véhicule, le système assure le verrouillage automatique des portes et autres ouvrants du véhicule, dès que l'utilisateur portant l'organe d'identification est sorti de la zone de couverture desdites antennes extérieures.

Jusqu'à présent, les antennes sont disposées dans les poignées de porte extérieures, c'est-à-dire à l'extérieur du véhicule dans un environnement assez contraignant.

Le but de l'invention est de proposer un meilleur emplacement pour ces antennes.

A cet effet, l'invention a pour objet un véhicule automobile équipé d'un dispositif de reconnaissance assurant la commande des moyens de verrouillage des portes du véhicule automobile, ledit dispositif de reconnaissance étant apte à échanger à distance des données avec un organe d'identification porté par un utilisateur pour permettre l'accès au véhicule lorsque l'organe d'identification a été authentifié par le dispositif de reconnaissance, ce dernier étant relié à au moins une antenne disposée sur le véhicule, caractérisé en ce que l'antenne est disposée à l'intérieur du véhicule dans une poignée de retenue de passager.

La poignée de retenue de passager peut être entendue comme étant:
- Soit la poignée placée au dessus d'une portière d'un passager à l'avant ou à l'arrière du véhicule. Généralement, une telle poignée de retenue n'est pas présente au dessus de la portière du côté conducteur du véhicule.
- Soit la poignée située au niveau de l'accoudoir sur le côté intérieur d'une portière à l'avant ou à l'arrière du véhicule.

Avec cette disposition, l'antenne est soumise à un environnement moins contraignant que l'extérieur du véhicule. Une poignée de retenue de passager est généralement moins utilisée qu'une poignée de porte extérieure ce qui diminue les risques de rupture de la liaison électrique reliant l'antenne au dispositif de reconnaissance. Avec cette disposition, l'antenne se trouve plus éloignée des parties métalliques du véhicule que dans le cas où elle serait disposée dans une poignée de porte extérieure, notamment une poignée de porte de type palette.

Selon un mode de réalisation particulier du véhicule selon l'invention, une antenne est disposée dans une poignée de retenue sur un côté du véhicule et une autre antenne est disposée dans une autre poignée de retenue sur l'autre côté du véhicule ce qui permet d'effectuer une détection sélective de l'organe d'identification selon qu'il se trouve d'un côté ou de l'autre du véhicule si les deux antennes ont des zones de couvertures débordant respectivement d'un côté et de l'autre du véhicule. Une telle sélectivité est intéressante car elle permet lorsque l'antenne située du côté droit ou côté passager détecte qu'un utilisateur autorisé s'approche du véhicule de ce côté, de commander par exemple le déverrouillage des serrures des portes uniquement du côté passager et lorsque l'antenne située du côté gauche ou côté conducteur détecte qu'un conducteur autorisé du véhicule s'approche de ce dernier du côté conducteur, de commander le déverrouillage des serrures des portes uniquement du côté conducteur (ou des deux côtés). Si les zones de couverture des deux antennes se recouvrent à l'intérieur du véhicule, il devient également possible de détecter la présence de l'organe d'identification selon qu'il se trouve à l'intérieur ou à l'extérieur du véhicule.

Selon un autre mode de réalisation particulier du véhicule selon l'invention, une antenne est disposée dans chacune des poignée de retenue présentes dans le véhicule - ces poignées de retenue sont au nombre de quatre lorsqu'elles sont situées au niveau de l'accoudoir de chaque portière et au nombre de trois lorsque elles sont placées au dessus d'une portière d'un passager à l'avant ou à l'arrière du véhicule -. Ceci permet d'effectuer une détection sélective de l'organe d'identification selon qu'il se trouve à l'avant ou à l'arrière, d'un côté ou de l'autre du véhicule si les différentes antennes ont des zones de couvertures débordant respectivement d'un côté et de l'autre, à l'avant et à l'arrière du véhicule

Un exemple de réalisation d'un véhicule équipé du système d'accès dit « mains libres » selon l'invention est décrit ci-après plus en détail et illustré sur les dessins.

La figure 1 est une vue de dessus d'un véhicule équipé d'un système d'accès dit « mains libres » selon l'invention.

La figure 2 illustre une poignée de retenue de passager dans laquelle est disposée une antenne du système d'accès dit « mains libres ».

La figure 3 est une vue de dessus d'un véhicule équipé d'un système d'accès dit « mains libres » selon un autre mode de réalisation de l'invention.

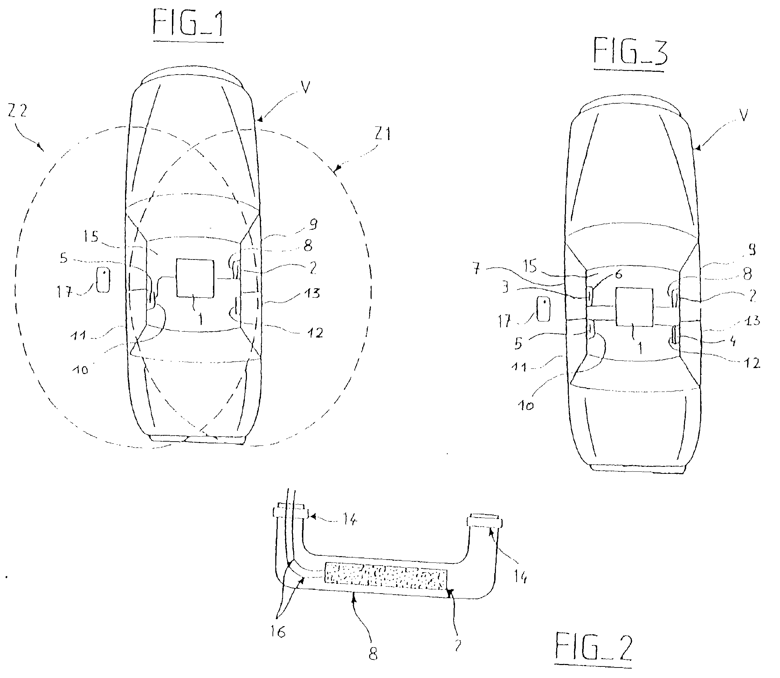

En se reportant à la figure 1, on peut voir un véhicule V équipé d'un système d'accès dit « mains libres » qui comporte un dispositif de reconnaissance 1 relié à deux antennes 2 et 5 disposées respectivement du côté droit et du côté gauche du véhicule V. Plus particulièrement, l'antenne 2 est noyée dans la poignée de retenue de passager 8 disposée au-dessus de la porte avant droite 9 du véhicule V et l'antenne 5 est noyée dans la poignée de retenue de passager 10 disposée au-dessus de la porte arrière gauche 11 du véhicule V. Il est entendu que l'antenne 2 pourrait tout aussi bien être noyée dans la poignée de retenue de passager 12 disposée au-dessus de la porte arrière droite 13 du véhicule V.

Sur la figure 2, on voit à titre d'exemple l'antenne 2 qui est noyée dans la poignée de retenue de passager 8. Cette poignée de retenue 8 peut être montée pivotante sur deux axes 14 fixés sur un côté latéral du pavillon 15 du véhicule V au-dessus de la porte avant droite 9 de celui-ci. On a représenté par 16 les fils électriques reliant l'antenne 2 au dispositif de reconnaissance 1.

Sur la figure 1, on a également représenté en tirets les zones de couverture Z1 et Z2 des deux antennes 2 et 5, lorsqu'elles sont alimentées à puissance nominale. Chacune des deux zones déborde d'un côté du véhicule V et les deux zones de couverture se recouvrent à l'intérieur du véhicule. En conséquence, si un utilisateur portant un organe d'identification 17 se trouve dans la position représentée sur la figure 1, près de l'antenne 5 et à l'extérieur du véhicule V, il est détecté uniquement par l'antenne 5. Si l'organe d'identification 17 se trouve près de l'antenne 2 et à l'extérieur du véhicule V, il est détecté uniquement par l'antenne 2. Si l'organe d'identification 17 se trouve à l'intérieur du véhicule V, il est détecté à la fois par l'antenne 2 et par l'antenne 5. Le dispositif de reconnaissance 1 peut ainsi déterminer de façon sélective si l'organe d'identification 17 se trouve à l'extérieur du véhicule du côté droit, à l'extérieur du véhicule du côté gauche, ou encore à l'intérieur du véhicule de façon à pouvoir commander des fonctions appropriées à chaque cas.

Sur la figure 3, on peut voir un véhicule V équipé d'un système d'accès dit « mains libres » qui comporte un dispositif de reconnaissance 1 relié à deux paires d'antennes (2,4 ; 3,5), chacune disposée respectivement du côté droit et du côté gauche du véhicule V. Pour chaque paire d'antennes, la première antenne (2;3) est disposée dans la poignée de retenue à l'avant du véhicule alors que la seconde antenne (4;5) de la paire est disposée dans la poignée de retenue à l'arrière du véhicule. Les poignées de retenue (6,8,10,12) dans lesquelles sont respectivement noyées les antennes (3,2,5,4) sont des poignées de retenue situées au niveau de l'accoudoir sur le côté intérieur de chaque portière (7,9,11,13).

Ainsi, selon les besoins, il sera possible d'intégrer un nombre d'antenne supérieur à deux. Dans ce mode de réalisation, quatre antennes sont intégrées dans les poignées de retenue respectives et permettent, comme dans le mode de réalisation de la figure 1, au dispositif de reconnaissance 1 de déterminer de façon sélective si l'organe d'identification 17 se trouve à l'extérieur du véhicule du côté avant ou arrière droit, à l'extérieur du véhicule du côté avant ou arrière gauche, ou encore à l'intérieur du véhicule de façon à pouvoir commander des fonctions appropriées à chaque cas.

Pour des raisons de clarté de la figure 3, les différentes zones de couverture des antennes (2,4 ; 3,5), lorsqu'elles sont alimentées à puissance nominale, n'ont pas été représentées mais le principe de sélectivité reste le même que celui décrit dans le cadre de la figure 1 tout en permettant une sélectivité avec un nombre de zones plus élevé. Ainsi, en plus de déterminer de quel côté du véhicule se trouve l'utilisateur lorsqu'il est à l'extérieur de celui-ci, il est possible de déterminer s'il se trouve à l'avant ou à l'arrière du véhicule.

Dans le cas d'un positionnement de l'antenne dans la poignée de retenue au dessus de la portière tel que présenté dans le mode de réalisation de la figure 1, une poignée de retenue du côté avant gauche du véhicule (côté conducteur), pourra éventuellement être prévue. Si besoin est, une antenne pourra être intégrée dans chacune des poignées de retenue présentes dans le véhicule et il sera ainsi possible d'intégrer au moins quatre antennes.

## Revendications

1. Un véhicule automobile équipé d'un dispositif de reconnaissance (1) assurant la commande des moyens de verrouillage des portes du véhicule automobile (V), ledit dispositif de reconnaissance étant apte à échanger à distance des données avec un organe d'identification (17) porté par un utilisateur pour permettre l'accès au véhicule lorsque l'organe d'identification a été authentifié par le dispositif de reconnaissance, ce dernier étant relié à au moins une antenne (2,3,4,5) disposée sur le véhicule, caractérisé en ce que l'antenne est disposée à l'intérieur du véhicule dans une poignée de retenue de passager (6,8,10,12).

2. Véhicule selon la revendication 1, caractérisé en ce que la poignée de retenue (6,8,10,12) est une poignée placée au dessus d'une portière d'un passager à l'avant ou à l'arrière du véhicule.

3. Véhicule selon la revendication 1, caractérisé en ce que la poignée de retenue (6,8,10,12) est une poignée située au niveau de l'accoudoir sur le côté intérieur d'une portière à l'avant ou à l'arrière du véhicule

4. Véhicule selon l'une des revendications 1 à 3, caractérisé en ce qu'il comprend au moins deux paire d'antennes (2,4;3,5), chaque paire d'antenne étant disposées respectivement sur un côté du véhicule, la première antenne d'une paire d'antenne (2,3) étant disposée dans la poignée de retenue à l'avant du véhicule, la seconde antenne de la paire (4,5) étant disposée dans la poignée de retenue à l'arrière du véhicule.
